# EUROPÄISCHE PATENTSCHRIFT

(11) **EP 0 515 582 B1**
(45) Veröffentlichungstag und Bekanntmachung des Hinweises auf die Patenterteilung: **06.03.1996**
(21) Anmeldenummer: 91914833.8
(22) Anmeldetag: 16.08.1991
(51) Int. Cl.: G01N 21/03

(54) **KÜVETTE ZUR AUFNAHME VON AUF OPTISCHEM WEGE ZU UNTERSUCHENDEN SUBSTANZEN**
CELL FOR OPTICAL TESTING OF SUBSTANCES
CUVETTE DESTINEE A CONTENIR DES SUBSTANCES A ANALYSER PAR DES MOYENS OPTIQUES

(30) Priorität: 17.12.1990 DE 9016832 U
(43) Veröffentlichungstag der Anmeldung: 02.12.1992
(73) Patentinhaber: KLOTH, Bernd, D-22399 Hamburg (DE)
(72) Erfinder: KLOTH, Bernd, D-22399 Hamburg (DE)
(74) Vertreter: Richter, Werdermann & Gerbaulet
(86) Internationale Anmeldenummer: EP9101564
(87) Internationale Veröffentlichungsnummer: WO9211527

(56) Entgegenhaltungen:
- US-A- 3 994 594
- US-A- 4 043 678
- US-A- 4 332 471
- US-A- 4 639 135

## Beschreibung

Die Erfindung geht aus von einer Küvette zur Aufnahme von vorzugsweise auf optischem Weg zu untersuchenden Substanzen, insbesondere zur Analyse von chromogenen Stoffen, Lösungen und Substraten, mit einem bodenseitig geschlossenen Meßabschnitt zur Aufnahme der Substanz, wie sie beispielsweise aus der WO-A-90/05903 bekannt ist.

Hierbei handelt es sich um eine Küvette zur Aufnahme von vorzugsweise auf optischem Wege zu untersuchenden Substanzen, insbesondere eine Meßküvette zur Analyse von chromogenen Stoffen, Lösungen bzw. Substraten. Bei dieser besteht eine besondere Eignung für die Analyse von photometrischen Bestimmungen über den gesamten Spektralbereich, hier besonders für chromogene Substrate, Enzymkinetische und Endpunktbestimmungen, die Küvette ist jedoch überall da einsetzbar, wo eine zu untersuchende Substanz transportiert, gelagert und/oder einem Untersuchungsgerät zugeführt werden soll.

Derartige sog. optische Meßküvetten werden vorzugsweise für analytische Messungen von enzymatischen Testen und Gerinnungsendpunktbestimmungen nach dem sog. Fibrintimer-Meßprinzip oder aber bei Enzymkinetik-Analysen verwendet. Bei derartigen Messungen wird die Meßküvette für den Meßvorgang in einen Meßblock oder Rotor eingelegt, wobei unter Zuhilfenahme eines am Boden des Meßabschnittes der Küvette aufgenommenen Rührstabes zunächst eine möglichst homogene Vermischung der zu analysierenden Substanzen und gleichzeitig bzw. anschliessend der eigentliche Meßvorgang erfolgt. Nach Abschluß der Messungen wird die Meßküvette aus dem Meßblock bzw. Rotor entnommen. Hierbei ist dafür zu sorgen, daß das Risiko der Kontamination des Bedienungspersonals beispielsweise durch infiziertes Probenmaterial so klein wie möglich gehalten wird.

Der Erfindung liegt deshalb die Aufgabe zugrunde, mit einfachen Maßnahmen dafür zu sorgen, daß bei Bereitstellung optimaler Randbedingungen für die Messung die Handhabung der Küvette vor, während und nach Abschluß der Messungen mit minimalem Kontaminationsrisiko erfolgen kann.

Die Aufgabe wird bei einer Küvette der eingangs genannten Art durch die im Patentanspruch 1 gekennzeichneten Merkmale gelöst.

Erfindungsgemäß wird eine Meßküvette geschaffen, die eine solche Formgebung hat, daß sie zur Aufnahme der Meßprobe und gleichzeitig als Leerküvette dazu herangezogen werden kann, einerseits den Meßabschnitt und damit die zu untersuchende Substanz nach außen abzuschirmen und andererseits als Transport- bzw. Handhabungshilfe für die Meßküvette mit der zu untersuchenden Substanz dienen zu können. Hierzu ist es lediglich erforderlich, zwei identisch ausgebildete Küvetten ineinanderzustecken, wodurch automatisch durch die auf- bzw. eingesteckte, leere Meßküvette ein Verschluß des Meßraumes der anderen Meßküvette eintritt. In diesem Zustand kann die Meßprobe, beispielsweise infiziertes Probenmaterial, ohne Kontaminationsgefahr für das Bedienungspersonal aus dem Meßblock oder einem dafür vorgesehenen Rotor entnommen werden. somit erweist sich auch die Entsorgung der analysierten Proben als problemlos. Insbesondere dann, wenn die Steckverbindung zwischen den Küvetten lösbar gestaltet ist, ergibt sich eine Vereinfachung der Verfahrensschritte bei der Entsorgung der Proben, da vor den eigentlichen Entsorgungs-Verfahrensschritten die Steckverbindung bereits gelöst werden kann. Dabei ergibt sich durch die erfindungsgemäßen Maßnahmen der zusätzliche Vorteil, daß Leerküvetten einerseits platzsparend und gleichzeitig so gestapelt bzw. transportiert werden können, daß ein in der Meßküvette regelmäßig eingelegter Rührstift nicht verlorengehen kann. Man kann die auf diese Weise gestapelten Küvetten in einen vereinzelungsspender einsetzen, aus dem eine Einzelentnahme der Küvetten mit weitestgehend reduzierter Verschmutzungsgefahr des Meßabschnitts ermöglicht ist.

Es ist grundsätzlich möglich, die Küvette nach oben, d.h. im Anschluß an den Meßabschnitt, oder nach unten, d.h. im Anschluß an den Meßabschnittboden, zu verlängern. Im letzteren Fall ist es möglich, den Verlängerungsabschnitt entweder weiter oder schlanker zu gestalten als das Außenmaß des eigentlichen Menabschnitts.

Besonders vorteilhaft bezüglich der Handhabung der Küvette erweist sich allerdings die Weiterbildung gemäß Schutzanspruch 2, gemäß dem der Verlängerungsabschnitt die Küvette nach oben verlängert und eine Innenkontur hat, die im wesentlichen der Außenkontur des Meßabschnitts entspricht. Mit dieser Gestaltung wird der Abstand zwischen dem zu analysierenden Substrat und dem nach oben offenen Rand der Küvette möglichst groß gehalten, so daß ein Nachaußendringen von Substrat wirksam ausgeschlossen ist, insbesondere dann, wenn der Meßabschnitt der einen Küvette durch den Meßabschnitt der aufgesetzten Küvette abgedeckt ist. Wenn die Steckverbindung durch eine zusätzliche Verriegelung beispielsweise in Form einer Schnappverriegelung gesichert wird, eröffnet diese Gestaltung die Möglichkeit, für das Verrühren der Substanz im Meßblock bzw. im Meßrotor eine bislang nicht anwendbare Kinematik zu verwenden, wodurch die Qualität der Messung zusätzlich angehoben werden kann. Durch die Anpassung der Innenkontur des Verlängerungsabschnitts an die Außenkontur des Menabschnittes ergibt sich ein formschlüssiger Eingriff der Meßküvetten, durch den nicht nur die Stapelbarkeit, sondern auch die Abdichtung des Meßvolumens nach außen verbessert werden können.

Die erfindungsgemäße Meßküvette ist dementsprechend zweiteilig aufgebaut. Für den Fall, daß die beiden Abschnitte der Küvette innenseitig und/oder außenseitig über eine Schulter ineinander übergehen, wird im zusammengestecken Zustand zweier Küvetten zumindest eine zusätzliche Abdicht- bzw. Funktionsfläche geschaffen, über die das Meßvolumen der Küvette im zusammengesteckten Zustand zweiter Küvetten nach außen abgeschirmt bzw. eine zusätzliche Stabilisierung der beiden ineinandergesteckten Meßküvetten zueinander sichergestellt werden kann.

Vorzugsweise ist der Verlängerungsabschnitt endseitig mit zumindest einem Verriegelungsteil versehen, das mit einem komplementär gestalteten, dazu axial versetzten Verriegelungsabschnitt an der weiteren, in Steckverbindung tretenden Küvette in verriegelungseingriff bringbar ist. Mit dieser Gestaltung gelingt es, durch eine einfache Translations-Relativbewegung zwischen den zu verbindenden Küvetten eine sichere Verriegelung herzustellen. Die Entnahme der Meßküvette aus einem Meßblock oder Rotor kann auf diese Weise so erfolgen, daß eine Leerküvette auf die Meßküvette gedrückt wird, wodurch allein durch die Axialbewegung der Leerküvette eine ausreichend sichere steckverbindung bereitgestellt wird. Die Meßküvette kann dementsprechend aus dem Meßblock genommen werden, ohne berührt zu werden, was das Risiko einer Kontamination durch ggf. infizierte Meß-substanzen bzw. -Substraten erheblich verringern hilft.

Die Verriegelung zwischen den ineinandergesteckten Küvetten kann auf verschiedenste Art und Weise erfolgen. So ist es beispielsweise denkbar, im Bereich der eineinandergesteckten Flächen einen Reibschluß vorzusehen. Besonders vorteilhaft erweist sich allerdings eine Verriegelung, bei der ein formschlüssiges Ineinandergreifen und vorzugsweise ein Verrasten von Verriegelungsteilen erfolgt. Diese Art der Verriegelung hat den besonderen Vorteil, daß die Funktion der Verriegelung von den Toleranzen bei der Fertigung der Küvetten weitgehend unabhängig wird.

Wenn gemäß Patentanspruch 5 im Bereich der Verriegelungen zusätzlich Positionierungsflächen vorgesehen sind, so können diese in vorteilhafter Weise dazu genutzt werden, die ineinanderzusteckenden Küvetten gegenseitig auszurichten. Dies eröffnet in vorteilhafter Weise die Möglichkeit, die Meßküvetten beispielsweise in einem Spender derart zu stapeln, daß eine leichte Vereinzelung und Einzelentnahme der Küvetten möglich ist.

Insbesondere dann, wenn dem Verriegelungsteil gemäß Patentanspruch 6 zwei Positionierungsflächen zugeordnet sind, die keilförmig aufeinander zulaufen, ergibt sich bei entsprechender Gestaltung der Gegenflächen im Verriegelungsabschnitt beim Zusammenstecken der Küvetten eine automatische Lagefixierung, so daß ein Stapel exakt miteinander fluchtend ausgerichteter Meßküvetten gebildet werden kann.

Grundsätzlich genügt bei entsprechender Formgebung der Küvette bereits ein einzelnes Verriegelungsteil. Zur zusätzlichen Anhebung der Verriegelungssicherheit im zusammengesteckten Zustand ist es doch vorzuziehen, gemäß Patentanspruch 7 mit mehreren, vorzugsweise zwei in gleichmäßigem Umfangsabstand zueinander angeordneten Verriegelungsteilen zu arbeiten.

Bei Ausgestaltung der Verriegelungsteile in Form axial ausgerichteter Hakenabschnitte ergibt sich bei entsprechend dünnwandiger Gestaltung der Meßküvette eine ausreichende radiale Elastizität, die in vorteilhafter Weise dazu ausgenutzt werden kann, die im zusammengesteckten Zustand einschnappende Verriegelung gezielt zu lösen.

Vorzugsweise haben die Hakenabschnitte eine Dicke, die im wesentlichen der Wandstärke der Küvette im Bereich des Verlängerungsabschnitts entspricht.

Insbesondere im Zusammenwirken mit den axial ausgerichteten Hakenabschnitten der Verriegelungsteile ist die Weiterbildung gemäß Patentanspruch 10 von besonderem Vorteil. Gemäß dieser Ausgestaltung sind im Bereich der Verriegelungsabschnitte lediglich Vertiefungen, d.h. Einziehungen für die entsprechenden Hakenabschnitte vorzusehen, wobei bereits eine sehr geringe Tiefe dieser Einziehungen genügt, um den Hakenabschnitten nach dem Hintergreifen der Kontur der Einziehung einen ausreichend großen Widerstand entgegenzusetzen. Diese Einziehungen sind beispielsweise dann, wenn die Küvette aus Kunststoff hergestellt wird, sehr einfach zu realisieren. Darüber hinaus hat diese Ausgestaltung den zusätzlichen Vorteil, daß die Innenoberfläche der Meßküvette durchgehend glatt gestaltet werden kann.

Wie vorstehend bereits erwähnt, ist es zur Vereinfachung der Ausgestaltung der Verriegelung von Vorteil, die Küvette zumindest im Bereich der Verriegelungsteile und/oder der Verriegelungsabschnitte radial elastisch auszubilden. Es genügt in diesem Fall, die Küvette zwischen Zeigefinger und Daumen zusammenzudrücken, um die Hakenabschnitte zur Entriegelung aus den Einziehungen auszuhaken.

Der erfindungsgemäße Aufbau der Meßküvette schränkt darüber hinaus die Möglichkeiten bezüglich der Formgebung des Meßabschnitts nicht ein. So ist es beispielsweise möglich, die Küvette in vorteilhafter Weise zumindest im Bereich des Meßabschnitts mit einem von der Kreisform abweichenden Innenquerschnitt auszugestalten, der dann an das jeweils zur Anwendung kommende optische Meßprinzip angepaßt wird. Um beispielsweise photometrische Tests nach dem Lambeer'schen Gesetz durchführen zu können, ist die Meßküvette gemäß der vorteilhaften Weiterbildung nach Patentanspruch 13 im Meßbereich so ausgestaltet, daß sie durch die planparallelen Seitenwandabschnitte eine vorbestimmte Meß-schichtdicke einschließt. Derartige photometrische Tests werden insbesondere bei der Analyse von chromogenen Substraten und in der Enzymkinetik durchgeführt. Um die Meßergebnisse möglichst wenig zu verfälschen, ist dafür zu sorgen, daß das planparallele Fenster zur Einfassung der Meßschicht so klar bzw. so transparent wie möglich ausgeführt wird. Es hat sich gezeigt, daß hierfür Kunststoffe ohne weiteres anwendbar sind. Besonders vorteilhaft hat sich in diesem Bereich die Verwendung von Kunststoffen aus der Gruppe der Polystyrole und Polymethylacrylate herausgestellt, wobei aus der letzteren Gruppe insbesondere Polymethylmethacrylat (PMMA) besonders gute Ergebnisse sicherstellt. Diese Kunststoffe ermöglichen darüber hinaus eine derart exakte Verarbeitung beispielsweise im Urform- bzw. Umform-Prozeß, daß die Wandstärken der Meßküvette und die Geometrien der Küvetten-Querschnitte so genau eingehalten werden können, daß reproduzierbare, qualitativ hochwertige Messungen durchgeführt werden können.

Diese oben erwähnten Formgenauigkeiten können selbst dann eingehalten werden, wenn die Wandstärke der Küvette und damit die Dicke der planparallelen Seitenwandabschnitte im Bereich zwischen 0.5 und 0.7 mm liegen. Vorzugsweise wird in diesem Fall der seitliche Abstand der planparallelen Seitenwandabschnitte und damit die Größe der dem optischen Heßprozeß unterworfenen Schichtdicke im Bereich zwischen 5 und 10 mm gehalten. Durch die Verbindung der planparallelen Seitenwandabschnitte über Rundungen ergibt sich darüber hinaus der zusätzliche Vorteil, daß das im Meßabschnitt gefangene, zu untersuchende Substrat einer wirksamen Durchmischung unterzogen werden kann, wenn die Meßküvette beispielsweise in einen geeigneten Rotor bzw. Rüttler eingelegt wird. Die Durchmischung kann zusätzlich dadurch verbessert werden, daß in die Meßküvette ein Rührstift eingelegt wird. Insbesondere dann, wenn entsprechend schutzanspruch 21 der Boden des Meßabschnitts eben und plan ausgebildet ist, kann sich der Rührstift sanft und glatt im Meßabschnitt bewegen, wenn die Meßküvette einer entsprechenden Bewegung, beilspielsweise einer Rotation unterzogen wird. Toträume im Meßabschnitt werden auf diese Weise zuverlässig vermieden, was der Qualität des Meßergebnisses weiter zugute kommt.

Grundsätzlich ist es möglich, Meßabschnitt und Verlängerungsabschnitt aus zwei Teilen auszubilden. Vorteile bezüglich der Handhabung und Reinigung bzw. Sterilisierung bereits gebrauchter Meßküvetten ergeben sich allerdings dann, wenn die Küvette insgesamt einstückig ausgebildet ist.

Der erfindungsgemäße Aufbau der Meßküvette erlaubt es sogar, mehrere Küvetten zu Meßküvetten-Anordnungen zusammenzufassen, die dann als Gruppe in einen Meßblock bzw. zunächst in eine geeignete Mischvorrichtung bzw. -rotor eingesetzt werden. In diesem Fall werdne benachbarte Meßküvetten vorzugsweise über einstückig angeformte Stege miteinander verbunden, wobei die Lage der Stege vorzugsweise so gelegt wird, daß die zur Herstellung der Verriegelung zwischen ineinandergesteckten Küvetten erforderliche Elastizität der Küvette möglichst wenig beeinträchtigt wird.

Es ist auf diese Weise möglich, Küvetten zu Kreissegmenten, Leisten oder zu geschlossenen Ringen bzw. Rotoren zusammenzufassen, die insgesamt mit entsprechend ausgebildeten Küvetten-Anordnungen zusammengesteckt und vorzugsweise verriegelt bzw. verrastet werden können.

Nach einer bevorzugten Weiterbildung ist vorgesehen, eine Anordnung mehrerer Küvetten dadurch vorzunehmen, daß die Küvetten in einem Rotor angeordnet sind, der als Ringscheibe ausgebildet ist, in der Aufnahmedurchbrechungen ausgebildet sind, wobei jeweils eine Küvette mit ihrem Meßabschnitt in eine Aufnahmedurchbrechung einsteckbar ist, wobei bevorzugterweise vorgesehen ist, daß jeweils zwei Aufnahmedurchbrechungen parallel angeordnet sind.

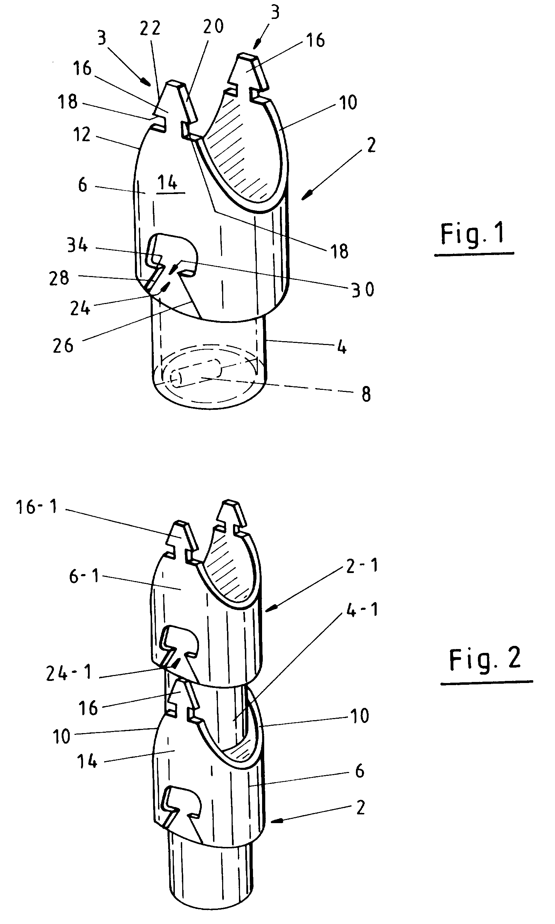

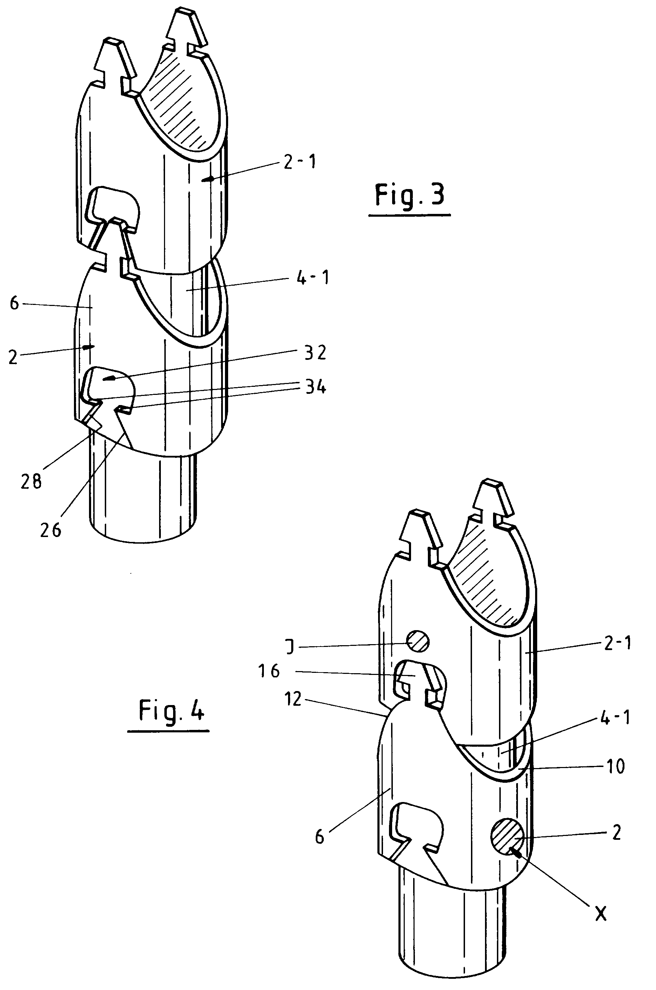

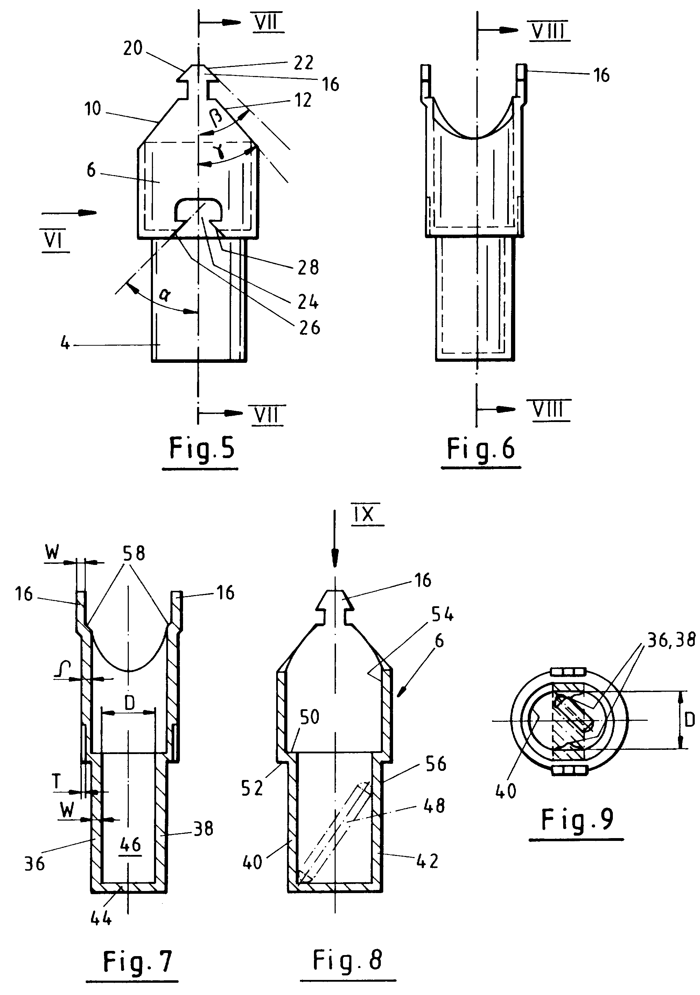

Nachstehend werden anhand schematischer Zeichnungen mehrere Ausführungsbeispiele der Erfindung näher erläutert. Es zeigen
- Fig. 1: eine perspektivische Ansicht einer ersten Ausführungsform der Meßküvette,
- F i g. 2: eine perspektivische Ansicht zweier identisch ausgebildeter Meßküvetten in axial ausgerichteter Relativlage vor dem Zusammenstecken,
- F i g. 3: die perspektivische Ansicht gemäß Figur 2 im Lose zusammengesteckten Zustand der beiden Küvetten,
- F i g. 4: eine perspektivische Ansicht der Küvetten gemäß Figur 2 und 3 im vollständig zusammengesteckten und verrasteten Zustand,
- F i g. 5: eine Seitenansicht der Meßküvette,
- F i g. 6: eine Ansicht der Meßküvette mit einer Blickrichtung gemäß Pfeil VI in Figur 5,
- Fig. 7: den Schnitt gemäß VII-VII in Figur 5,
- Fig. 8: den Schnitt gemäß VIII-VIII in Figur 6,
- Fig. 9: die Ansicht gemäß IX in Figur 8,
- F i g. 10 bis 12: schematische Darstellungen von Meßküvetten, die zu verschiedenen Strukturen zusammengefaßt sind,
- F i g. 13: eine Schnittansicht einer weiteren Ausgestaltung der Meßküvette,
- F i g. 14: eine Ansicht des Schnitts gemäß XIV-XIV in Figur 13,
- F i g. 15: einen Schnitt einer weiteren Ausführungsform der Meßküßvette,
- F i g. 16: in einer Seitenansicht eine weitere Ausführungsform der Meßküvette,
- F i g. 17: in einer Draufsicht einen Meßrotor, und
- F i g. 18: in einer Seitenansicht zwei Meßrotoren beim Aufeinandersetzen.

In Figur 1 ist mit dem Bezugszeichen 2 eine Meßküvette bezeichnet, wie sie bevorzugterweise für analytische Messungen von enzymatischen Testen und Gerinnungsendpunktbestimmungen nach dem Fibrintimer-Meßprinzip Verwendung findet. Hierbei handelt es sich um eine optische Analyse von chromogenen Substraten. Diese Meßküvetten werden allerdings auch allgemein in der Enzymkinetik verwendet, wobei in diesem Fall ebenfalls auf optischem Wege eine Analyse des Substrats vorgenommen wird.

Derartige Meßküvetten werden zunächst in eine Mischvorrichtung bzw. einen Mischrotor eingesetzt, in dem eine homogene Durchmischung des zu untersuchenden Substrats erfolgt. An diesem Vorgang schließt sich der eigentliche Meßvorgang an. Schließlich ist die Meßküvette aus dem Meßblock oder Rotor so zu entfernen, daß das Risiko einer Kontamination des Bedienungspersonals durch beispielsweise infiziertes Probenmaterial möglichst klein gehalten werden kann. Zu diesem Zweck ist die Meßküvette folgendermaßen aufgebaut:

An den eigentlichen Meßabschnitt 4 zur Aufnahme der zu analysierenden Substrate bzw. Substanzen schließt sich oberseitig ein Verlängerungsabschnitt 6 an, der weiter als der Meßabschnitt 4 ausgebildet und so gestaltet ist, daß er einen Meßabschnitt 4-1 einer benachbarten Meßküvette aufnehmen kann. Die Anordnung ist dabei derart getroffen, daß eine vorzugsweise lösbare Steckverbindung zwischen benachbarten Küvetten 2 und 2-1 herstllbar ist, wobei der Menabschnitt 4-1 der eingesteckten Küvette 2-1 den Meßabschnitt 4 der anderen Meßküvette 2 nach oben weitgehend abschließt und im eingesteckten Zustand als Handhabungshilfe bzw. Transportmittel für die Meßküvette 2 dient. Dadurch werden zwei Hauptfunktionen bereitgestellt:
a) Die Meßküvetten 2, 2-1, ..., 2-n sind raumsparend stapelbar, wobei aufgrund der Steckverbindung zuverlässig dafür gesorgt ist, daß ein im Meßabschnitt 4, der gleichzeitig als Rührabschnitt dient, aufgenommener Rührstift 8 nicht verlorengehen kann;
b) wenn eine Meßküvette nach Durchführung der Messung bzw. nach Durchführung eines Rührvorganges aus einem Meßblock bzw. einem Mischer bzw. Rotor entnommen werden soll, kann eine Leerküvette als Griff bzw. Handhabungseinrichtung für die das Meßgut enthaltende Meßküvette herangezogen werden, wodurch eine Kontaminationsgefahr für das Bedienungspersonal durch möglicherweise infiziertes Meßsubstrat von vornherein ausgeschlossen wird;
c) wenn die Meßküvetten zusammengesteckt sind, dient die über dem Meßabschnitt liegende Kontur zu einer verkratzsicheren Lagerung der Küvette. Kratzspuren auf dem Meßfenster sorgen für Fehlmessungen.

Um diesen drei Grundfunktionen optimal gerecht zu werden, ist die Meßküvette nach einer ersten Ausführungsform gemäß den Figuren 2 bis 9 folgendermaßen gestaltet:

Um das Einführen eines Meßabschnitts 4-1 einer Meßküvette 2-1 in den Verlängerungsabschnitt 6 der Meßküvette 2 zu erleichtern, wird eine Spielpassung zwischen der Innenkontur des Verlängerungsabschnitts 6 und der Aussenkontur des Meßabschnitts 4-1 vorgesehen. Zur zusätzlichen Erleichterung des Zusammenführens weist der Verlängerungsabschnitt 6 bzw. 6-1 auf zwei diametral gegenüberliegenden Seiten Abschrägungen 10 und 12 auf. Zwischen diesen Abschrägungen 10 und 12 verbleiben Abschnitte 14, die endseitig die als Verriegelungsteile 3 wirkenden, axial ausgerichtete Hakenabschnitte 16 tragen. Im konkreten Fall sind diese Hakenabschnitte von pfeilartig gestalteten Doppelhaken gebildet, die zwei Verriegelungsschultern 18 aufweisen, an die sich jeweils eine Positionierungsfläche 20 bzw. 22 anschließt. Die Positionierungsflächen 20,22 laufen aufeinander zu und definieren auf diese Weise den pfeilförmigen Doppelhaken, der mit einem nachfolgend näher zu beschreibenden Verriegelungsabschnitt 24-1 am bodenseitigen Ende des Verlängerungsabschnitts 6-1 der Meßküvette 2-1 in Funktionseingriff treten kann. Man erkennt aus den Darstellungen gemäß Figur 2 bis 4, daß die Verriegelungsabschnitte 24 axial mit den Hakenabschnitten 16 fluchten bzw. ausgerichtet sind, so daß das Zusammenstecken zweiter Küvetten 2, 2-1 nur in einer vorbestimmten Relativ-Verdrehlage der Meßküvetten zueinander möglich ist.

Der Verriegelungsabschnitt 24 ist als Einziehung bzw. Vertiefung in der Außenfläche des Verlängerungsabschnitts 6 ausgeführt. Die Einziehung 24, 24-1 hat im wesentlichen die Kontur eines Schlüssellochs, wobei zwei Abschnitte entstehen. Im unteren Bereich werden zwei im Winkel aufeinander zulaufende Schrägflächen 26,28 gebildet, wobei die Neigung der Schrägflächen im wesentlichen der Neigung der Positionierungsflächen 20,22 entspricht. Die Schrägflächen enden in einer Verengung 30, an die sich eine hinterschnittene Rundung 32 mit ebenen Halteflächen 34 anschließt. Mit dieser Gestaltung sind folgende Funktionen realisierbar:

Im zusammengesteckten Zustand kommen - wie in Figur 3 gezeigt - zunächst die Schrägflächen 26,28 des Verriegelungsabschnitts 24 mit den Positionierungsflächen 20, 22 der Hakenabschnitte 16 in Anlagekontakt. über die Keilform der Kontaktflächen erfolgt eine saubere axiale Ausrichtung der ineinandergesteckten Küvetten. In dieser Relativ-Lagebeziehung können verhältnismäßig hohe Stapel von Küvetten gebildet werden und letztere somit in einem Küvetten-Spender aufgenommen werden, aus dem dann vereinzelte Küvetten entnommen werden. Die Anordnung ist derart getroffen, daß bereits in der Relativlage der Küvetten 2, 2-1 gemäß Figur 3 der Meß- und Rührabschnitt 4-1 vollständig in den verlängerungsabschnitt 6 der darunterliegenden Küvette 2 eintaucht, wodurch der Meßabschnitt bzw. das das zu analysierende Substrat aufnehmende Volumen des Meßabschnitts nach außen abgeschlossen wird. In dieser Relativlage kann somit ein Stapel von Küvetten sicher transportiert werden, ohne Gefahr zu laufen, daß ein in den Menabschnitt bereits eingelegter Rührstift 8 herausfallen und verlorengehen kann und daß die Menfenster durch diesen Sitz nicht in Berührung mit der aufnehmenden Küvette kommen können, was die Verkratzung der Meßfenster verhindert. Aus der in Figur 3 gezeigten Stapelposition heraus können die Meßküvetten 2, 2-1 vereinzelt und mit zu analysierendem Substrat gefüllt werden, nachdem sie in einen Meßblock bzw. eine Hischvorrichtung bzw. einen Rotor eingesetzt wurden.

Wenn die Meßküvette nach erfolgtem Rührvorgang bzw. Meßvorgang aus dem Rotor bzw. dem Meßblock herausgenommen werden soll, wird eine Leerküvette so weit auf die Meßküvette aufgeschoben, daß die Hakenabschnitte 16 in Verriegelungseingriff mit dem Verriegelungsabschnitt 24 der darauf gesetzten Küvette 2-1 gelangen. Dieser Zustand ist in Figur 4 gezeigt. Beim Aufschieben der Leerküvette 2-1 weichen die Abschnitte 14 und damit die Hakenabschnitte 16 radial nach außen aus, woraufhin die Hakenabschnitte 16 hinter der Verengung 30 in die Rundung 32 der schlüssellochförmigen Einziehungen 24 rasten bzw. schnappen. Dabei kann dafür gesorgt werden, daß durch geeignete Gestaltung der Abschrägungen 10,12 in Anpassung an die Schrägflächen 26,28 ein Bewegungsanschlag geschaffen wird, damit die Hakenabschnitte 16 vor überbeanspruchungen gesichert werden. Mittels der Leerküvette 2-1, die vorzugsweise an den Abschnitten 14 erfaßt wird, kann dann die Meßküvette 2 aus dem Meßblock bzw. aus dem Rotor genommen werden. Die bereits entnommene Küvette übernimmt bei der nächsten Entnahme einer Küvette die Funktion der Leerküvette, womit sichergestellt ist, daß nur eine Leerküvette für die Entnahme von Küvetten notwendig ist. Da - wie aus Figur 4 deutlich ersichtlich - der Meß- und Rührabschnitt 4-1 der Leerküvette 2-1 verhältnismäßig weit in den Verlängerungsabschnitt 6 der Meßküvette 2 eintaucht, ist die Gefahr des Austretens von Meßsubstrat weitestgehend ausgeschlossen, wodurch das Kontaminationsrisiko für die Bedienungsperson so klein wie möglich gehalten wird.

Zur Entriegelung können die Kragenabschnitte im oberen inneren Bereich der Hakenabschnitte so ausgestaltet werden, daß sie über einen Hinterschnitt verfügen, der es ermöglicht, hinter die Haken 16 zu fassen und sie somit aus den Halteflächen 24 zu entfernen und somit die Küvette zu entriegeln. Dies ist beispielsweise dadurch möglich, daß die Meßküvette 2 an den Stellen X - siehe Figur 4 - mittels Daumen und Zeigefinger erfaßt wird, so daß sich unter elastischer radialer Verformung die Hakenabschnitte 16 radial nach außen bewegen. In diesem Zustand kann die Leerküvette 2-1 problemlos, d.h. kraftfrei von der Küvette 2 abgezogen werden. Eine andere Möglichkeit besteht darin, die Abschnitte 14 der Leerküvette 2-1 an den Stellen Y zusammenzudrücken, so daß gleichermaßen die Hakenabschnitte 16 mit ihren Verriegelungsschultern 18 außer Fluchtung mit den Halteflächen 34 gelangen und dementsprechend eine Axialverschiebung der beiden Küvetten 2, 2-1 relativ zueinander ermöglicht wird. Es hat sich gezeigt, daß bereits eine sehr geringe Flächen-überlappung zwischen den Halteflächen 34 und den Verriegelungsschultern 18 genügt, um eine ausreichend feste verriegelung der beiden Küvetten im zusammengesteckten Zustand bereitzustellen. Dementsprechend genügen bereits geringe radiale, elastische Verformungen der beiden Küvetten relativ zueiander, um die Verhakung bzw. Verriegelung oder Verrastung zu lösen.

Das vorstehend beschriebene Konzept der Küvettengestaltung ist grundsätzlich für eine Vielzahl von KüvettenFormgebungen realisierbar. Besondere zusätzliche Vorteile ergeben sich allerdings dann, wenn die Küvette wie in den Figuren 5 bis 9 im einzelnen dargestellt ausgeführt wird. Hierbei sind für diejenigen Bestandteile der Küvette, die bereits anhand der Figuren 1 bis 4 erläutert worden sind, identische Bezugszeichen verwendet.

Man erkennt aus den Darstellungen gemäß Figur 5 bis 9, daß der Querschnitt der Meßküvette - siehe insbesondere Figur 9 - eine von der Kreisform abweichende ovale bzw. elliptische Form hat. Diese Querschnittsgestaltung ist sowohl im Bereich des Verlängerungsabschnitts 6 als auch im Bereich des Meß- und Rührabschnitts 4 vorgesehen. Insbesondere im Bereich des Meß- und Rührabschnitts hat diese Formgebung besondere Vorteile, die nachstehend näher beschrieben werden sollen:

An planparallele Seitenwandabschnitte 36,38 (siehe Figur 7) schließen sich stufenlos Rundungsabschnitte 40, 42 an, die beispielsweise von Halbkreislinien gebildet sind. Hierbei könnte allerdings auch eine Parabelform oder ein Ellipsenabschnitt Verwendung finden. In der Verbindung mit der planen bzw. ebenen Gestaltung der Bodenwand 44 ergeben sich gute Voraussetzungen für das Durchmischen des im Meßraum 46 aufgenommenen Substrats mittels eines Rührstabes 8 bzw. 48, der in Figur 8 mit strichpunktierten Linien in etwas abgewandelter Form dargestellt ist. Darüber hinaus wird zwischen den planparallelen Seitenwänden 36,38, die in vorbestimmtem Abstand D zueinander stehen und eine vorbestimmte Wandstärke W haben, eine genau definierte Menstrecke bzw. ein reproduzierbares Meßvolumen geschaffen, wobei die hierdurch definierte Menschichtdicke D + 2 x W beste Voraussetzungen für eine gute Reproduzierbarkeit photometrischer Teste beispielsweise nach dem Lambeer'schen Gesetz schafft. Die vorstehend beschriebene Küvette eignet sich deshalb in besonderem Maße für die Analyse von chromogenen Substraten und für photometrische Tests auf dem Gebiet der Enzymkinetik.

Voraussetzung hierfür ist allerdings, daß der Meßabschnitt zumindest im Bereich der planparallelen Seitenwände 36,38 hochtransparent bzw. klar ausgebildet ist. Dies wird vorzugsweise dadurch erreicht, daß die Küvette insgesamt aus Kunststoff aus der Gruppe der Polystyrole und Polymethylacrylate besteht. Besonders vorteilhaft hat sich die Verwendung von Polymethylmethacrylat erwiesen, da dieses Material sehr klar bzw. transparent ist und darüber hinaus mit hoher Genauigkeit formbar, beispielsweise im Spritzgußverfahren bzw. im Tiefziehprozeß gestaltbar ist. Dabei ist es möglich, die Küvette aus Kunststoff mit einer im wesentlichen gleichbleibenden Wandstärke im Bereich zwischen 0.5 und 0.7 mm herzustellen. In diesem Fall liegt die Schichtdicke D im Bereich zwischen 5 und 10 mm. Mit diesen vorstehend gegebenen Maßen ergibt sich bei einer Höhe des Meßabschnitts und des Verlängerungsabschnitts im Bereich zwischen 10 und 15 mm eine ausreichende Elastizität der Küvettenabschnitte, um das Zusammenstecken und das Trennen ineinandergesteckter Küvetten mit Leichtigkeit vornehmen zu können.

Die Figuren 5 bis 9 lassen erkennen, daß der Verlängerungsabschnitt 6 in den eigentlichen Meß- und Rührabschnitt 4 über eine Innenschulter 50 bzw. Außenschulter 52 übergeht. Im zusammengesteckten Zustand zweiter Küvetten kann die Innenschulter 50 zusätzlich dazu herangezogen werden, eine Abdichtung des Menraums 46 nach außen zu unterstützen. Wie im einzelnen aus Figur 9 hervorgeht, entspricht die Innenkontur 54 des Verlängerungsabschnitts 6 im wesentlichen der Außenkontur 56 des Meß- und Rührabschnitts 4, so daß ein formschlüssiger Eingriff zwischen den Meßküvetten sichergestellt ist.

Aus Figur 7 ist erkennbar, daß die Tiefe T der Einziehungen 24nur einen Bruchteil der Wandstärke S des Verlängerungsabschnitts 6 ausmacht, die ebenfalls im Bereich zwischen 0.5 und 0.7 mm liegt. Um die Hakenabschnitte 16 nicht zusätzlich schwächen zu müssen, gehen diese über eine Stufe 58 in den prismatischen Verlängerungsabschnitt 6 über. Die Dicke W der Hakenabschnitte 16 kann auf diese Weise in der gleichen Größenordnung gehalten werden wie die Wandstärke der Küvette im übrigen Teil.

Die Neigung ALPHA der Schrägflächen 26,28 entspricht der Neigung BETA der Positionierungsflächen 20,22 zur Längsmittelachse 60 der Küvette. Entsprechend ist auch der Winkel GAMMA der Abschrägungen 10 und 12 gewählt.

Abweichend von dem zuvor beschriebenen Ausführungsbeispiel ist es auch möglich, anstelle einer einstückigen Ausbildung der Küvette zwei Teile, nämlich einen Meß- und Rührabschnitt und einen sich daran anschließenden Aufnahmeabschnitt zusammenzustecken, wobei in diesem Fall allerdings dafür gesorgt werden muß, daß die Verbindung zwischen diesen beiden Teilen nach außen hermetisch abgedichtet ausgeführt ist.

Die Verriegelungen sind bei dem zuvor beschriebenen Ausführungsbeispiel im Bereich des Verlängerungsabschnitts vorgesehen. Dies ist nicht unbedingt erforderlich. Es ist vielmehr auch möglich, diese Verriegelungen im Bereich des Meß- und Rührabschnitts, allerdings vorzugsweise an der Außenoberfäche vorzusehen.

Es ist auch möglich, im Bereich der Außenschulter 52 zusätzliche Verriegelungshilfen beispielsweise in Form von bajonettartigen Verschlüssen vorzusehen.

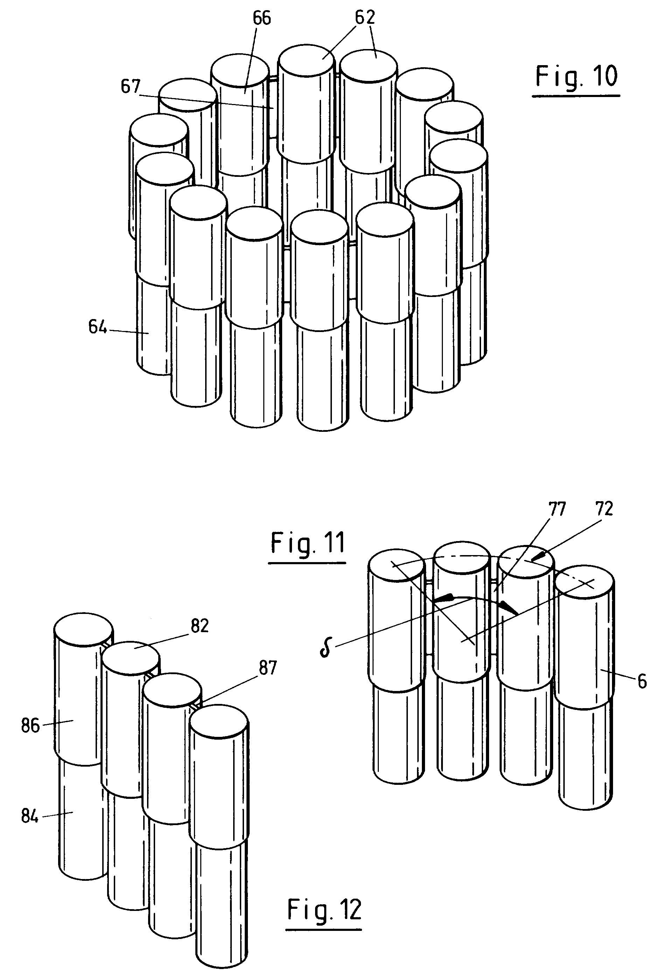

Der erfindungsgemäße Aufbau der Küvette erlaubt es auch, mehrere Küvetten zu Baugruppen bzw. Analyse-Anordnungen zusammenzustellen. Die ist schematisch in den Figuren 10 bis 12 angedeutet. Hierbei sind die Küvetten der Einfachheit halber mit zylindrischem Querschnitt dargestellt. Es soll jedoch hervorgehoben werden, daß auch bei derartigen Zusammenstellungen der Küvetten zu Meß- anordnungen Querschnittsgestaltungen verwendet werden können, wie sie anhand der Figuren 1 bis 9 erläuutert wurden.

Bei der Anordnung gemäß Figur 10 sind Meßküvetten 62 zu einem Kreisring zusammengefaßt. Hierzu sind zumindest die Verlängerungsabschnitte 66 durch vorzugsweise angeformte Stege 67 miteinander verbunden. Die Anordnung gemäß Figur 10 kann dementsprechend komplett in einen Meßblock bzw. in einen Rotor eingesetzt und insgesamt durch Aufsetzen einer weiteren, identisch ausgebildeten Leer-Anordnung aus dem Rotor bzw. aus dem Meßblock genommen werden.

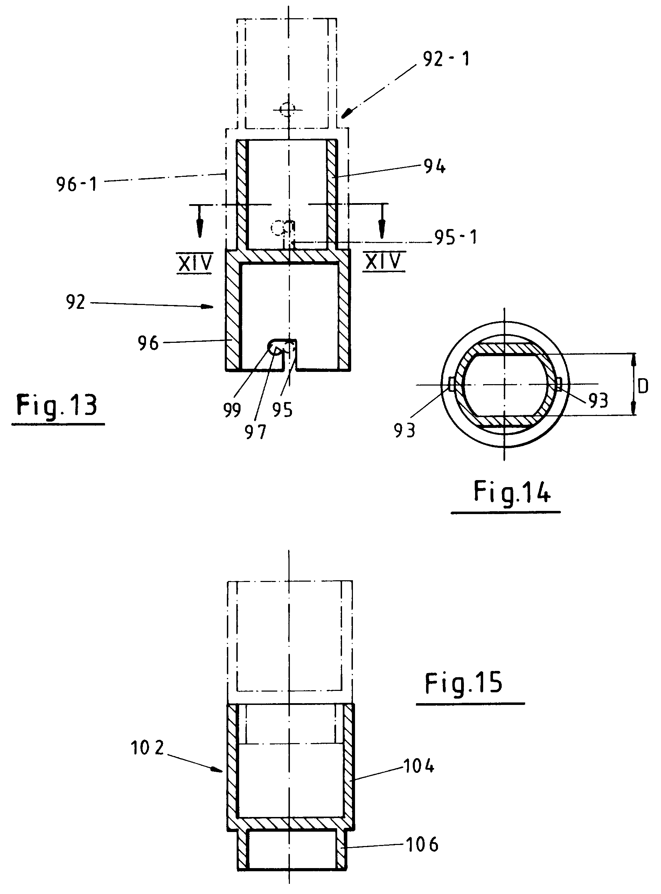

Die Ausführungsformen gemäß Figur 11 und 12 unterscheiden sich von der Anordnung gemäß Figur 10 hinsichtlich der Anzahl und der Form der Anordnungen. Gemäß Figur 11 sind lediglich vier Meßküvetten 72 unter Verwendung angeformter Stege 77 zu einer Kreissegment-Gruppe zusammengefaßt. Der Zentrierwinkel DELTA beträgt beispielsweise 90°.

Die Ausführungsform gemäß Figur 12 unterscheidet sich von derjenigen gemäß Figur 11 lediglich dadurch, daß hier eine lineare Anordnung der Meßküvetten 82 gewählt ist. Die Verbindungsstege sind mit 87 bezeichnet.

In den Figuren 13 und 14 ist eine weitere Ausführungsform einer Meßküvette 82 gezeigt, bei der in Abwandlung von dem zuvor beschriebenen Ausführungsbeispiel der Verlängerungsabschnitt 96 die Meßküvette nach unten verlängert. 94 bezeichnet den Meß- und Rührabschnitt. Gemäß diesem Ausführungsbeispiel ist der Meßabschnitt 94 in den Verlängerungsabschnitt 96-1 einsteckbar. Dabei greift ein Noppen 93 auf jeder Seite des Meßabschnitts 94 in einen Längsschlitz 95-1 der aufgesetzten Leerküvette 92-1 ein. In dieser Lage können die Küvetten gestapelt werden. Ddurch Relativverdrehung zwischen den Küvetten schnappen die Noppen 93 über eine Verengung 97 in eine leicht hinterschnittene Ausnehmung 99, wodurch eine Verriegelung gegen Abziehen hergestellt ist.

Man erkennt aus der Darstellung gemäß Figur 14, daß auch bei dieser Ausführungsform planparallele Seitenwände des Meßabschnitts 94 verwendet werden, die zwischen sich eine Schichtdicke vorbestimmter Breite D definieren.

Schließlich soll anhand der Figur 15 eine dritte Ausführungsform einer Meßküvette 102 beschrieben werden, die sich von den zuvor beschriebenen Ausführungsformen dadurch unterscheidet, daß der Meßabschnitt 104 weiter gestaltet ist als der Verlängerungsabschnitt 106, dessen Außenkontur bei dieser Ausführungsform der Innenkontur des Meß- bzw. Rührabschnitts 104 entspricht. Auch hier ist wiederum ein Zusammenstecken der Küvetten möglich, wobei nicht näher dargestellte Verriegelungen bzw. Verrastungen Anwendung finden. Diese können beispielsweise auch durch einen Reibschluß zwischen der Innenoberfläche des Abschnitts 104 und der Außenoberfläche 106 bereitgestellt werden.

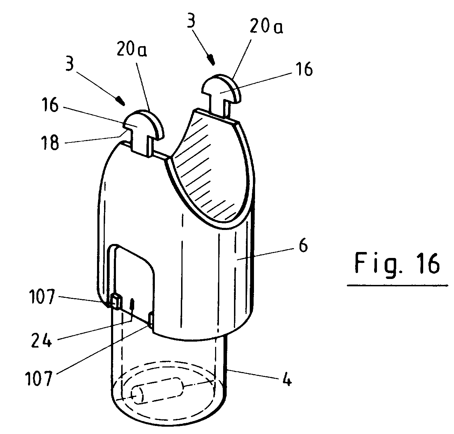

In Figur 16 ist eine weitere Ausführungsform einer Küvette dargestellt, bei der die Verriegelungsteile 3 als Hakenabschnitte 16 ausgebildet sind, die eine zylinderabschnittsförmige Positionsfläche 20a und je zwei Verriegelungsschultern 18 aufweisen.

Der Verriegelungsabschnitt 24 ist auch hierbei als Einziehung bzw. Vertiefung in der Außenfläche des Verlängerungsabschnittes 6 ausgeführt, jedoch ist vorgesehen, daß im Randbereich jedes verriegelungsabschnittes 24 mindestens ein kleiner Vorsprung 107 ausgebildet ist, der eine geringere Höhe als die Tiefe des verriegelungsabschnittes 24 aufweist. Hierdurch können die Hakenabschnitte 16 einer weiteren, nicht dargestellten, Küvette in die verriegelungsabschnitte eingeschoben werden, indem sie über die Vorsprünge 107 hinübergeschoben werden und anschließend einrasten, da dann die Verriegelungsschultern 18 eines Hakenabschnittes von den beiden Vorsprüngen 107 hintergriffen werden, so daß die Küvetten miteinander verbunden sind.

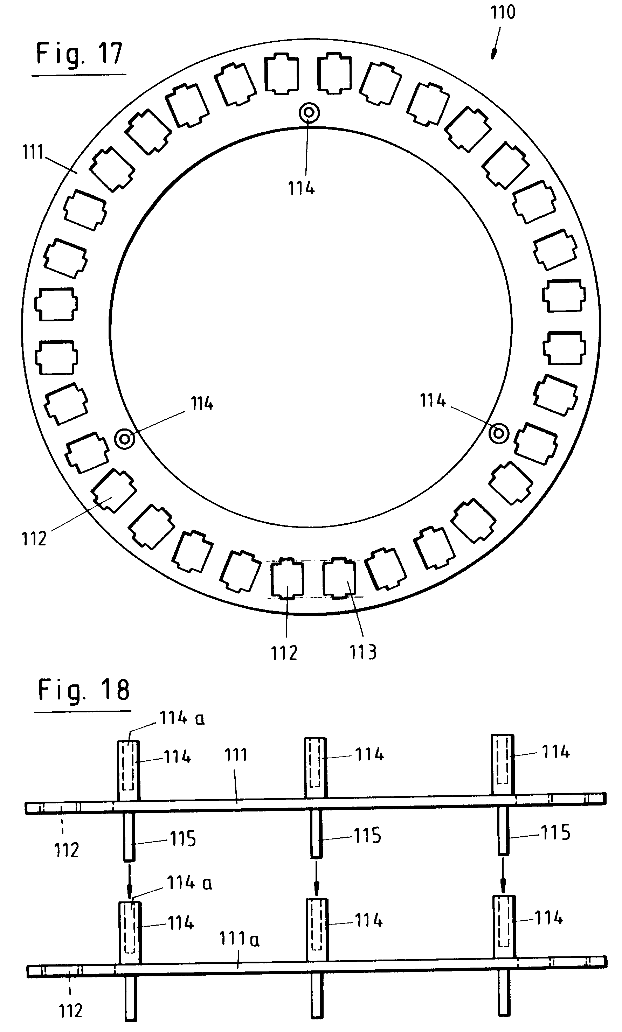

Der in den Figuren 17 und 18 dargestellte Meßrotor 110 ist für den Einsatz in automatischen Analysengeräten vorgesehen, bei denen immer jeweils zwei Meßküvetten gleichzeitig untersucht werden. Der Meßrotor 110 besteht dabei aus einer Ringscheibe 111, in der Aufnahmedurchbrechungen 112,113 ausgebildet sind. Dadurch, daß der Meßrotor als Ringscheibe ausgebildet ist, und daß in ihm im wesentlichen gleich beabstandete Aufnahmeabschnitte ausgebildet sind, ist er bei Verwendung der erfindungsgemäßen Küvetten vollständig mit Küvetten und insbesondere auch dem Rührglied bestückbar, wobei die Meßküvetten durch entsprechend aufgesetzte weitere Meßküvetten sicherbar sind. Es sind dabei jeweils zwei Aufnahmedurchbrechungen 112,113 parallel ausgerichtet, wie dies in der Zeichnung durch die gestrichelte Linie angedeutet ist, so daß eine gleichgerichtete Anordnung der Meßküvetten vorliegt, so daß diese gleichzeitig im Untersuchungsgerät bearbeitet werden können. Weiterhin ist der Meßrotor 110 oben und unten mit ineinandergreifenden Führungselementen versehen, die im gestapelten Abstand für einen entsprechenden Abstand sorgen. Die Führungselemente bestehen aus auf einer Seite angeordneten Aufnahmehülsen 114, in denen eine Aufnahmebohrung 114a ausgebildet ist und aus auf der anderen Seite des Meßrotors entsprechend angeordneten Einsteckstiften 115. Die Anordnung erfolgt dabei derart, daß jeder Einsteckstift 115 in eine Aufnahmehülse 114 einer weiteren Ringscheibe 111a einsteckbar ist. Diese Möglichkeit der Stapelbarkeit der Menrotoren 111,111a führt nicht nur zu einer leichten Stapelbarkeit der mit entsprechenden Meßküvetten gefüllten Meßrotoren, sondern er führt durch die gleichzeitig ineinandersteckbaren Meßküvetten zu einer Sicherung der Mixelemente. Weiterhin ist durch die bei aufeinandergesteckten Meßrotoren 111,111a ineinandergesteckten Meßküvetten (in der Zeichnung nicht dargestellt) eine Sicherung der Mixelemente einerseits und ein Schutz der Meßfenster andererseits gegeben.

Die Rotorausgestaltung erfolgt dabei so, daß die Aufnahmedurchbrechungen 112,113 so gestaltet sind, daß jeweils eine Küvette mit ihrem Meßabschnitt in eine Aufnahmedurchbrechung 112,113 einsteckbar und über den Verlängerungsabschnitt halterbar ist.

Insgesamt bietet das Zusammenwirken der neuen Meßküvetten mit dem neuen Meßrotor für die Meßküvetten große Möglichkeiten einer Vereinfachung von Messungen bei gleichzeitig sehr stark gestiegener Sicherheit bei der Handhabung solcher Meßküvetten.

## Patentansprüche

1. Küvette zur Aufnahme von vorzugsweise auf optischem Weg zu untersuchenden Substanzen, insbesondere zur Analyse von chromogenen Stoffen, Lösungen und Substraten, mit einem bodenseitig geschlossen Meßabschnitt zur Aufnahme der Substanz,
dadurch gekennzeichnet,
daß sich an den Meßabschnitt (4;64;74;84;94;104) ein die Küvette verlängernder Abschnitt (6;66;76;86;96;106) anschließt, über den eine vorzugsweise lösbare Steckverbindung zum Meßabschnitt (4-1) einer weiteren Küvette (2-1) herstellbar ist und daß der Verlängerungsabschnitt (6) endseitig mit zumindest einem Verriegelungsteil (3) versehen ist, das mit einem komplementär gestalteten, dazu axial versetzten und fluchtenden Verriegelungsabschnitt (24-1) an der weiteren Küvette (2-1) in Verriegelungseingriff bringbar ist.

2. Küvette nach Anspruch 1,
dadurch gekennzeichnet,
daß der Verlängerungsabschnitt (6) die Küvette (2) nach oben verlängert und eine Innenkontur (54) hat, die im wesentlichen der Außenkontur (56) des Meßabschnitts (4) entspricht.

3. Küvette nach Anspruch 1 oder 2,
dadurch gekennzeichnet,
daß die beiden Abschnitte (4,6) der Küvette (2) innenseitig und/oder außenseitig über eine Schulter (50,52) ineinander übergehen.

4. Küvette nach Anspruch 3,
dadurch gekennzeichnet,
daß das Verriegelungsteil (3) mit zumindest einer Positionierungsfläche (20,22) ausgestattet ist, die im ineinandergesteckten Zustand der Küvetten (2,2-1) mit entsprechenden Gegenflächen (26,28) der angrenzenden Küvette in Anlagekontakt bringbar ist.

5. Küvette nach Anspruch 4,
dadurch gekennzeichnet,
daß jedem Verriegelungsteil (3) zwei Positionierungsflächen (20,22) zugeordnet sind, die keilförmig aufeinander zulaufen.

6. Küvette nach einem der Ansprüche 3 bis 5,
dadurch gekennzeichnet,
daß der Verlängerungsabschnitt (6) mehrere, in gleichmäßigem Umfangsabstand zueinander angeordnete Verriegelungsteile (3) hat.

7. Küvette nach einem der Ansprüche 3 bis 6,
dadurch gekennzeichnet,
daß die Verriegelungsteile (3) im wesentlichen axial ausgerichtete Hakenabschnitte (16) aufweisen.

8. Küvette nach Anspruch 7,
dadurch gekennzeichnet,
daß die Hakenabschnitte eine Dicke (W) haben, die im wesentlichen der Wandstärke der Küvette im Verlängerungsabschnitt (6) entspricht.

9. Küvette nach einem der Ansprüche 3 bis 8,
dadurch gekennzeichnet,
daß der Verriegelungsabschnitt von Vertiefungen (24) in der Außenoberfläche der Küvette (2) gebildet ist, wobei die Tiefe (T) und die Kontur der Vertiefung (24) an die Gestalt des zumindest einen Verriegelungsteils (3) angepaßt ist.

10. Küvette nach Anspruch 9,
dadurch gekennzeichnet,
daß die Küvette zumindest im Bereich des zumindest einen Verriegelungsteils (3) und/oder des Verriegelungsabschnitts (24) radial elastisch ausgebildet ist.

11. Küvette nach einem der Ansprüche 1 bis 10,
dadurch gekennzeichnet,
daß die Küvette zumindest im Bereich des Meßabschnitts (4) einen von der Kreisform abweichenden Innenquerschnitt hat.

12. Küvette nach Anspruch 11,
dadurch gekennzeichnet,
daß der Meßabschnitt (4) zwei einander gegenüberliegende planparallele Seitenwandabschnitte (36,38) vorgegebener Dicke (W) aufweist, die einen vorbestimmten Abstand (D) zueinander haben und durch Rundungen (40,42) verbunden sind.

13. Küvette nach Anspruch 12,
dadurch gekennzeichnet,
daß die Dicke (W) im Bereich zwischen 0.5 und 0.7 mm und der Abstand der planparallelen Seitenwandabschnitte zwischen 5 und 10 mm beträgt.

14. Küvette nach Anspruch 12 oder 13,
dadurch gekennzeichnet,
daß der jeweilige Verriegelungsabschnitt (24) in axialer Richtung mit dem jeweiligen Seitenwandabschnitt (36,38) fluchtet.

15. Küvette nach einem der Ansprüche 1 bis 14,
dadurch gekennzeichnet,
daß der Meßabschnitt (4;94) im zusammengesteckten Zustand der Küvetten (2,2-1) vollständig innerhalb des Verlängerungsabschnitts (6;96) zu liegen kommt und somit kratzsicher gelagert ist und kratzsicher transportiert und vereinzelt und in die Meßposition eingeführt werden kann.

16. Küvette nach einem der Ansprüche 1 bis 15,
dadurch gekennzeichnet,
daß der Meßabschnitt (4) und der Verlängerungsabschnitt (6) einstückig miteinander verbunden sind.

17. Küvette nach einem der Ansprüche 1 bis 16,
dadurch gekennzeichnet,
daß die Küvette zumindest im Bereich des Meßabschnitts (4) aus klarem Kunststoff besteht.

18. Küvette nach Anspruch 17,
dadurch gekennzeichnet,
daß der Kunststoff aus der Gruppe der Polystyrole und Polymethylacrylate ausgewählt ist.

19. Küvette nach Anspruch 18,
dadurch gekennzeichnet,
daß der Kunststoff aus der Gruppe der Polymethylmethacrylate (PMMA) ausgewählt wird.

20. Küvette nach einem der Ansprüche 1 bis 19,
dadurch gekennzeichnet,
daß der Boden (44) des Meßabschnitts (4) eben und plan ausgebildet ist.

21. Anordnung nach einem der Ansprüche 1 bis 20,
dadurch gekennzeichnet,
daß die Gegenflächen (26,28) an einem Vorsprung, Nocken oder Haken ausgebildet sind, die im ineinandergesteckten Zustand der Küvetten (2,2-1) die Verriegelungsschultern (18) eines Hakenabschnittes (16) hintergreifen und diesen so haltern.

22. Küvette nach einem der Ansprüche 1 bis 20,
dadurch gekennzeichnet,
daß im Randbereich des jeweiligen Verriegelungsabschnittes (24) mindestens ein Vorsprung, Nocken oder Haken (107) ausgebildet ist, der eine geringere Höhe als die Tiefe des Vertiefungsabschnittes (24) aufweist, so daß der Hakenabschnitt (16) einer weiteren Küvette über den Vorsprung, Nocken oder Haken (107) überschiebbar ist und im ineinandergeschobenen Zustand der Küvetten (2,2-1) der Vorsprung, Nocken oder Haken (107) eine Verriegelungsschulter (18) eines Hakenabschnittes (16) hintergreift und diese haltert.

23. Anordnung mehrerer Küvetten gemäß einem der vorhergehenden Ansprüche in einer Gruppe, wobei benachbarte Küvetten (62;72;82) durch Stege (76;77;87) miteinander verbunden sind.

24. Anordnung nach Anspruch 23,
dadurch gekennzeichnet,
daß die Stege (67;77;87) an die Verlängerungsabschnitte (66;76;86) angeformt sind.

25. Anordnung nach Anspruch 23 oder 24,
dadurch gekennzeichnet,
daß mehrere Küvetten (82) in einer Reihe zur Bildung einer Meßküvettenleiste angeordnet sind.

26. Anordnung nach Anspruch 23 oder 24,
dadurch gekennzeichnet,
daß die Küvetten (62;72) auf einem Kreis bzw. einem Kreisbogen angeordnet sind.

27. Anordnung mehrerer Küvetten gemäß einem der vorhergehenden Ansprüche,
dadurch gekennzeichnet,
daß die Küvetten in einem Rotor (110) angeordnet sind, der als Ringscheibe (111) ausgebildet ist, in der Aufnahmedurchbrechungen (112,113) ausgebildet sind, wobei jeweils eine Küvette mit ihrem Meßabschnitt in eine Aufnahmedurchbrechung (112,113) einsteckbar und über den Verlängerungsabschnitt halterbar ist.

28. Anordnung nach Anspruch 27,
dadurch gekennzeichnet,
daß jeweils zwei Aufnahmedurchbrechungen parallel angeordnet sind.

29. Anordnung nach Anspruch 27 oder 28,
dadurch gekennzeichnet,
daß die Ringscheibe auf ihrer Oberseite mit mindestens einer Aufnahmehülse (114) und auf ihrer Unterseite mit mindestens einem Einsteckstift (115) versehen ist, wobei der Einsteckstift in die Aufnahmehülse einer weiteren Ringscheibe (114) einsteckbar ist.

## Claims

1. Cell for holding substances for optical testing, more particularly for the analysis of chromogenic substances, solutions or substrates with a measuring section which is sealed at the bottom for holding the substance, **characterized in that**,
adjoining the measuring section (4;64;74;84;94;104), is a section (6;66;76;86;96;106) extending the cell, above which a preferably detachable plug-in connection to the measuring section (4-1) of a further cell (2-1) can be established and in that the extension section (6), at its end, is provided with at least one locking part (3), which can be moved into locking engagement withn a complimetarily constructed, axially offset thereto and aligned therewith locking section (24-1) on the further cell (2-1).

2. Cell according to Claim 1,
**characterized in that**
the extension section (6) extebds the cell (2) upwardly and possesses an internal contour (54) which corresponds substantially to the external contour (56) of the measuring section (4).

3. Cell according to either Claim 1 or 2,
**characterized in that**
the two sections (4,6) of the cell (2), on the inside and/or on the outside, merge into each other via a shoulder (50,52).

4. Cell according to any of Claims 1 through 3,
**characterized in that**
the locking part (3) is fitted with at least one positioning surface (20,22) which, in the insertionally fitted-together state of the cells (2,2-1), can be brought into bearing contact with corresponding opposing surfaces (26,28) of the adjoining cell.

5. Cell according to Claim 4,
**characterized in that**
two positioning surfaces (20,22) are allocated to each locking part (3), which taper toward each other in a wedge-configured fashion.

6. Cell according to any of Claims 3 through 5,
**characterized in that**
the extension section (6) possesses several locking parts (3) disposed so as to be spaced apart at a uniform circumferential distance.

7. Cell according to any of Claims 3 through 6,
**characterized in that**
the Locking parts (3) possess essentially axially aligned hook sections (16).

8. Cell according to Claim 8,
**characterized in that**
the hook sections have a thickness (W) which corresponds substantially to the wall thickness of the cell within the extension section (6).

9. Cell according to any of CLaims 3 through 8,
**characterized in that**
the Locking section is constituted of recesses (24) in the external surface of the cell (2), in which the depth (T) and the contour of the recesses (24) are adapted to the configuration of at least one locking part ( 3).

10. Cell according to Claim 9,
**characterized in that**
the cell, at least within the area of at least one locking part (3) and/or of the locking section (24), is constructed so as to be radially elastic.

11. Cell according to any of Claims 1 through 10,
**characterized in that**
the cell, at least within the region of the measuring section (4), possesses an external cross-section which diverges from the circular configuration.

12. Cell according to Claim 11,
**characterized in that**
the measuring section (4) possesses two oppositely located plane parallel side wall sections (36,38) of a predetermined thickness (W), which are speced apart from each other at a predetermined distance (D) and are connected by means of rounded portions (40,42).

13. Cell according to Claim 12,
**characterized in that**
the thickness (W) ranges between 0.5 mm and 0.7 mm and in that the distance of the plane parallel side wall sections ranges between 5 mm and 10 mm.

14. Cell according to either Claim 12 or 13,
**characterized in that**
the respective locking section (24) is aligned in the axial direction with the respective side wall section (36,38)

15. Cell according to any of Claims 1 through 14,
**characterized in that**
the measuring section (4;94), in the insertionally fitted-together state of the cells (2,2-1), comes to be located completely within the extension section (6;96) and is consequently supported in a scratchproof manner and can be transported in a scratchproof manner and can be individually introduced into the measuring position.

16. Cell according to any of Claims 1 through 15,
**characterized in that**
the measuring section (4) and the extension section (6) are interconnected so as to constitute one piece.

17. Cell according to any of Claims 1 through 16,
**characterized in that**
the cell, at least within the area of the measuring section (4), is comprised of a clear plastic.

18. Cell according to Claim 17,
**characterized in that**
the plastic is selected from the group of the polystyrenes and polymethylacrylates.

19. Cell according to Claim 18,
**characterized in that**
the plastic is selected from the group of polymethylacrylates (PMMA).

20. Cell according to any of Claims 1 through 19,
**characterized in that**
the bottom (44) of the measuring section (4) is constructed so as to be even and plane.

21. Arrangement according to any of Claims 1 through 20,
**characterized in that**
the opposing surfaces (26,28) are constructed on a projection, cam or hook which, in the insertionally fitted-together state of the cells (2,2-1), engage behind the locking shoulders (18) of a hook section (16) and thus retain the same.

22. Cell according to any of Claims 1 through 20,
**characterized in that**,
within the marginal area of the respective locking section (24), at least one projection, cam or hook (107) is constructed, which is of a height that is smaller than the depth of the recess section (24) so that the hook section (18) of a further cell can be slid over the projection, cam or hook (107) and, in the insertionally fitted-together state of the cells (2,2-1), the projection, cam or hook (107) engages behind a locking shoulder (18) of a hook section (16) and mountingly retains the same.

23. Arrangement of several cells in a group according to one of the preceding claims, in which adjacent cells (62;72;82) are interconnected by means of webs (76; 77;87).

24. Arrangement according to Claim 23,
**characterized in that**
the webs (67;77;87) are formed onto the extension sections (66;76;86).

25. Arrangement according to either Claim 23 or 24,
**characterized in that**
several cells (82) are disposed in a series so as to form a strip of cells.

26. Arrangement according to either Claim 23 or 24,
**characterized in that** the cells (62;72) are disposed on a circle or on a circular arc.

27. Arrangement of several cells according to any of the preceding claims,
**characterized in that**
the cells are disposed in a rotor (110) which is constructed in the form of an annular disk (111), in which receiving perforations (112,113) are constructed, wherein, one cell at a time, with its measuring section, is insertable into a receiving perforation (112, 113) and mountable with the aid of the extension section.

28. Cell according to Claim 27,
**characterized in that**
two receiving perforations at a time are disposed so as to be parallel.

29. Arrangement according to either Claim 27 or 28, **characterized in that**
the annular disk, on its top side, is provided with at least one receiving sleeve (114) and, on its underside, with at least one inserting pin (115), the inserting pin being insertable into the receiving sleeve of a further annular disk (114).

## Revendications

1. Cuvette destinée à recevoir des substances à analyser de préférence par des moyens optiques, en particulier pour l'analyse de substances, solutions et substrats chromogènes, avec un tronçon de mesure fermé du côté du fond pour recevoir la substance,
**caractérisée en ce**
qu'un tronçon (6 : 66 ; 76 ; 86 ; 96 ; 106) qui prolonge la cuvette se raccorde au tronçon de mesure 4; 64; 74; 84; 94; 104), tronçon de prolongement par l'intermédiaire duquel une jonction emboîtable, de préférence amovible, peut être réalisée avec le tronçon de mesure (4-1) d'une autre cuvette et que le tronçon de prolongement (6) est pourvu à son extrémité d'au moins une partie de verrouillage (3) qui peut être amenée en prise de verrouillage avec un tronçon de verrouillage (24-1) de l'autre cuvette (2-1), configuré de manière complémentaire, décalé axialement et aligné par rapport à cette partie de verrouillage.

2. Cuvette selon la revendication 1,
**caractérisée en ce**
que le tronçon de prolongement 161 prolonge la cuvette (2) vers le haut et a un contour intérieur (54) qui correspond substantiellement au contour extérieur (56) du tronçon de mesure (4).

3. Cuvette selon la revendication 1 ou 2,
**caractérisée en ce**
que les deux tronçons (4, 6) de la cuvette (2) se confondent l'un dans l'autre côté intérieur et/ou côté extérieur par un épaulement (50, 52).

4. Cuvette selon la revendication 3,
**caractérisée en ce**
que la partie de verrouillage (3) est équipée d'au moins une surface de positionnement (20, 22) qui peut être amenée en contact d'appui, lorsque les cuvettes (2, 2-1) sont à l'état emboîté l'une dans l'autre, avec des surfaces antagonistes (26, 28) correspondantes de la cuvette adjacente.

5. Cuvette selon la revendication 4,
**caractérisée en ce**
que deux surfaces de positionnement (20, 22), qui se terminent l'une vers l'autre en clavette, correspondent à chaque partie de verrouillage (3).

6. Cuvette selon l'une des revendications 3 à 5,
**caractérisée en ce**
que le tronçon de prolongement (6) a plusieurs parties de verrouillage (3) placées l'une par rapport à l'autre à un écart périphérique régulier.

7. Cuvette selon l'une des revendications 3 à 6,
**caractérisée en ce**
que les parties de verrouillage (3) présentent des tronçons à crochet (16) orientés substantiellement axialement.

8. Cuvette selon la revendication 7,
**caractérisée en ce**
que les tronçons à crochet ont une épaisseur (W) qui correspond substantiellement à l'épaisseur de la paroi de la cuvette dans le tronçon de prolongement (6).

9. Cuvette selon l'une des revendications 3 à 8, **caractérisée en ce**
que le tronçon de verrouillage est formé par des évidements (24) dans la surface extérieure de la cuvette (2), la profondeur (T) et le contour de l'évidement (24) étant adaptés à la forme de la partie de verrouillage (3) qui existe au moins.

10. Cuvette selon la revendication 9,
**caractérisée en ce**
que la cuvette est configurée élastique dans le sens radial tout au moins dans la zone de la partie de verrouillage (3) qui existe au moins et/ou du tronçon de verrouillage (24).

11. Cuvette selon l'une des revendications 1 à 10,
**caractérisée en ce**
que la cuvette a, tout au moins dans la zone du tronçon de mesure (4), une section intérieure qui diffère de la forme circulaire.

12. Cuvette selon la revendication 11,
**caractérisée en ce**
que le tronçon de mesure (4) présente deux sections de paroi latérale (36, 38), opposées l'une à l'autre, d'épaisseur (W) prédéfinie qui ont un écart (D) prédéfini l'une par rapport à l'autre et qui sont reliées par des rondeurs 140, 42).

13. Cuvette selon la revendication 12,
**caractérisée en ce**
que l'épaisseur (W) est de l'odre de 0,5 à 0,7 mm et l'écart des sections de paroi latérale à faces planes et parallèles de 5 à 10 mm.

14. Cuvette selon la revendication 12 ou 13,
**caractérisée en ce**
que le tronçon de verrouillage (24) respectif est aligné dans le sens axial avec la section de paroi latérale (36, 38) respective.

15. Cuvette selon l'une des revendications 1 à 14,
**caractérisée en ce**
que le tronçon de mesure (4 ; 94) vient se poser, lorsque les cuvettes (2, 2-1) sont à l'état assemblé, entièrement à l'intérieur du tronçon de prolongement (6;96), est ainsi positionné en étant protégé contre les rayures et peut être transporté en étant protégé contre les rayures et peut être introduit en étant isolé dans la position de mesure.

16. Cuvette selon l'une des revendications 1 à 15,
**caractérisée en ce**
que le tronçon de mesure (4) et le tronçon de prolongement (6) sont reliés l'un à l'autre en une pièce.

17. Cuvette selon l'une des revendications 1 à 16,
**caractérisée en ce**
que la cuvette est en matière plastique claire au moins dans la zone du tronçon de mesure (4).

18. Cuvette selon la revendication 17,
**caractérisée en ce**
que la matière plastique est sélectionnée dans le groupe des polystyrènes et des polyméthylacrylates.

19. Cuvette selon la revendication 18,
**caractérisée en ce**
que la matière plastique est sélectionnée dans le groupe des polyméthacrylates de méthyle (PMMA).

20. Cuvette selon l'une des revendications 1 à 19,
**caractérisée en ce**
que le fond (44) du tronçon de mesure (4) est configuré en étant égal et plan.

21. Arrangement selon l'une des revendications 1 à 20,
**caractérisé en ce**
que les surfaces antagonistes (26, 28) sont configurées sur une saillie, un ergot ou un crochet, surfaces qui, lorsque les cuvettes (2, 2-1) sont à l'état emboîté l'une dans l'autre, saisissent par derrière les épaulements de verrouillage (18) d'un tronçon à crochet (16) et le maintiennent ainsi.

22. Cuvette selon l'une des revendications 1 à 20,
**caractérisée en ce**
qu'au moins une saillie, un ergot ou un crochet (107) est configuré dans la zone du bord du tronçon de verrouillage 124) respectif, crochet qui présente une hauteur inférieure à la profondeur de la section d'évidement (24) si bien que le tronçon à crochet (16) d'une autre cuvette peut être enfilé au-dessus de la saillie, de l'ergot ou du crochet (107) et que, lorsque les cuvettes (2, 2-1) sont à l'état glissé l'une dans l'autre, la saillie, l'ergot ou le crochet (107) saisit par derrière un épaulement de verrouillage (18) d'un tronçon à crochet (16) et le maintient.

23. Arrangement de plusieurs cuvettes selon l'une des revendications précédentes dans un groupe, des cuvettes voisines (62 ; 72 ; 82) étant reliées l'une à l'autre par des traverses (76 ; 77 ; 87).

24. Arrangement selon la revendication 23,
**caractérisé en ce**
que les traverses (67 ; 77 ; 87) sont moulées sur les tronçons de prolongement (66 ; 76 ; 86).

25. Arrangement selon la revendication 23 ou 24,
**caractérisé en ce**
que plusieurs cuvettes (82) sont placées dans une rangée pour former une barre de cuvettes de mesure.

26. Arrangement selon la revendication 23 ou 24,
**caractérisé en ce**
que les cuvettes (62 ; 72) sont placées sur un cercle ou un arc de cercle.

27. Arrangement de plusieurs cuvettes selon l'une des revendications précédentes,
**caractérisé en ce**
que les cuvettes sont placées dans un rotor (110) qui est configuré comme un disque annulaire (111), dans lequel des découpures de logement (112, 113) sont agencées, une cuvette pouvant être emboîtée avec son tronçon de mesure respectivement dans une découpure de logement (112, 113) et pouvant être maintenue par le tronçon de prolongement.

28. Arrangement selon la revendication 27,
**caractérisé en ce**
que deux découpures de logement sont respectivement placées parallèlement.

29. Arrangement selon la revendication 27 ou 28,
**caractérisé en ce**
que le disque annulaire est pourvu sur sa face supérieure d'au moins un manchon de logement (114) et sur sa face inférieure d'au moins une cheville à emboîter (115), la cheville à emboîter pouvant être emboîtée dans le manchon de logement d'un autre disque annulaire (114).
